# EUROPÄISCHE PATENTANMELDUNG

(11) **EP 4 785 790 A1**
(43) Veröffentlichungstag der Anmeldung: **05.08.2026**
(21) Anmeldenummer: 25154855.8
(22) Anmeldetag: 30.01.2025
(51) Int. Cl.: A01M 29/00, A01M 31/00, A01M 29/10, A01M 29/12, A01M 29/16, A01K 27/00

(54) **TIERABWEHRSYSTEM**

(71) Anmelder: Furter, Raphael, 8311 Brütten (CH)
(72) Erfinder: Furter, Raphael, 8311 Brütten (CH)
(74) Vertreter: Kley Associés

(57) **Zusammenfassung**

Es wird ein Tierabwehrsystem (10) vorgeschlagen, das einen Microcontroller (11) aufweist und an den eine Bildauswertungseinheit (12) mit einer Kamera (14) angeschlossen ist. Um eine hohe Autonomie des Tierabwehrsystems (10) zu erlangen, ist ein Sensor (13) an den Microcontroller (11) angeschlossen. Bei Erfassung eines Tieres durch den Sensor (13) erzeugt dieser eine Pegeländerung, die den Microcontroller (11) aus einem Ruhezustand in einen Betriebszustand überführt. Anschliessend aktiviert der Microcontroller (11) die Bildauswertungseinheit (12) und die Kamera (14). Mit so empfangenen Bildauswertungsdaten aktiviert der Microcontroller (11) ein den Bildauswertungsdaten entsprechendes Abwehrmittel (30).

## Beschreibung

Die vorliegende Erfindung bezieht sich auf ein Tierabwehrsystem gemäss dem Patentanspruch 1.

Gebäude, Grundstücke, Gärten und Spielplätze werden oftmals durch das Eindringen von Tieren wie Katzen, Hunden und Wildtieren verschmutzt, geschädigt oder diese Tiere können auch eine Bedrohung für Leib und Leben darstellen.

Es gibt eine Vielzahl von unterschiedlichen Tiervertreibungsgeräten oder Tiervertreibungssystemen, welche auf dem Markt befindlich sind. Sehr häufig handelt es sich um Geräte/Systeme mit chemischen Mitteln, mit Abwehrnetzen, Spannungszäunen, einem oder mehreren akustischen Sendern vorzugsweise im Ultraschallbereich und auslösbare Sprinkler bzw. Wasserdüsen.
Diese Abwehrmittel sind wichtig, jedoch nicht allein entscheidend: Von besonderer Bedeutung ist eine differenzierte Detektion der abzuwehrenden Tiere, insbesondere auch eine sogenannte Freund-Feind-Erkennung FFE. Wer will schon ein Gerät im Garten montiert haben, das insbesondere auch das eigene Lieblingstier verscheucht oder das Abwehrmittel gegen einen selbst richtet.

Die Patentliteratur nennt in einer nicht abschliessenden Weise folgende wesentliche Komponenten der vorgenannten Art von Geräten/Systemen:

### a) Sensorik

Die Sensoren sind als Bewegungsmelder, als Infrarotdetektoren bis hin zu Kameras mit nachgeschalteter Bildauswertung ausgebildet.

### b) Auswertemittel

Nebst der vorgenannten Bildauswertung - die eine verwertbare Angabe über das erfasste Objekt bzw. Tier liefern soll - braucht es weitere Auswertemittel zur Klassifikation und zu einer dem erkannten Objekt bzw Tier entsprechenden Reaktion. Dieses weitere Auswertemittel ist in aller Regel ein entsprechend programmierter Microcontroller, zB ein single chip processor mit RAM/ROM und IO, der die oder das Abwehrmittel entsprechend der Auswertung aktivieren kann.

### c) Abwehrmittel

Als Abwehrmittel ist ein fixer wie auch ein gesteuerter Wasserstrahl (also mit Zielfolge) bekannt. Ebenso sind optische und olfaktorisch wirkende wie auch mechanisch wirkende Abwehrmittel denkbar.

### d) Kombinationen von a), b) und c)

Die technischen Möglichkeiten zur Erkennung von abzuwehrenden Tieren, zur Auswahl eines wirksamen Abwehrmittels und dessen Aktivierung sind sehr vielfältig.

Rein beispielhaft werden nachfolgend Lösungen aus der Patentliteratur ohne irgendeinen Anspruch auf Vollständigkeit angegeben.

Die Veröffentlichungsschrift US 2023/0329219 A1 [1] mit dem Titel «SYSTEM AND METHODS FOR MITIGATION OF DANGEROUS WILDLIFE» offenbart eine Vorrichtung, ein System und Verfahren mit einer Bilderfassungsvorrichtung. Die aufgenommenen Bilder werden einem Prozessor zugeführt der mittels eines Algorithmus «gefährliche Wildtiere» in den aufgenommenen Bildern identifiziert. Basierend einer erfolgten Identifizierung eines gefährlichen Wildtieres kann die Prozessorschaltung einen abwehrenden Angriff auslösen mit zB Wassersprühen, einem akustischen Alarm, Aussendung von Geruchsstoffen oder Erzeugung seismischer Signale. Letzteres ist insbesondere hilfreich bei der Abwehr von Schlangen. Der Prozessor kann Informationen über das identifizierte Tier an einen Benutzer auf sein mobiles Mobilgerät übermitteln. Dazu ist ein Interface zur Registrierung von solchen Geräten vorgesehen, sei es über eine Mobile Subscriber Number - gemeinhin als Mobilnummer bezeichnet - oder eine E-Mailadresse.

Die Veröffentlichungsschrift US 2021/0259235 Al [2] mit dem Titel «DETECTION OF ANIMAL INTRUSIONSAND CONTROL OF A REPELLENT MECHANISM FOR DETECTED ANIMAL INTRUSIONS» offenbart eine elektronische Vorrichtung und ein Verfahren zur Erkennung eines Eindringens von Tieren und zur Steuerung eines Abwehrmechanismus'. Dabei wird ein Gebiet von einem Benutzer in verschiedene Zonen aufgeteilt: Die Zonen sind dabei gegliedert in solche, wo eine Abwehr erfolgen soll und in Zonen, wo keine Abwehr erfolgen darf. Eine Bildaufnahmevorrichtung erfasst zonenspezifisch Bilder und in einer Auswerteeinheit werden eindringende Tiere erkannt. Ein Repellent-Mechanismus (=Abweise- oder Abwehr-Mechanismus) wird auf der Grundlage der Feststellung aktiviert, dass sich das erkannte Tier in einer Zone befindet, in der das erkannte Tier abgewehrt werden soll.

Die Gebrauchsmusterschrift DE 202 11129 U1 [3] mit dem Veröffentlichungsdatum 12.12.2002 offenbart eine «Vorrichtung zum Fernhalten der Vögel». Die Vögel werden mit einem Stroboskop und einem Sensor erkannt. Bei jeder Annäherung eines Vogels an die zu schützende Zone wird aufgrund der IR-Erkennung das Stroboskop aktiviert mit einer Serie von starken Lichtblitzen, um eindringende Vögel abzuwehren. Zusätzlich wird in DE 202 11129 U1 angegeben, dass mittels von einer Videokamera aufgenommenen Vogelbewegungen gezielt Hochdruckwasserstrahlen ausgelöst werden können, die wie eine aktive militärische Flugabwehr eindringende Vögel treffen und somit verscheuchen können.

Trotz der seit 2002 erzielten sehr grossen Fortschritte in der Prozessor- und Softwaretechnik sind die Lösungen gemäss DE 202 11129 U1 oder gemäss US 2021/0259235 Al komplex. Insbesondere gemäss der US 2021/0259235 Al ist ein beträchtlicher Konfigurierungsaufwand vor der Inbetriebnahme zu leisten, der auch mit neuer Softwaretechnologie nicht geringer ist.

Es ist wichtig, ein Gerät/System bereitzustellen, das von den Beschaffungskosten und von den Betriebskosten her für eine beachtliche Mehrheit der Bevölkerung bezahlbar ist und gleichzeitig bezüglich Installations- und Konfigurierungsaufwand her von dieser beachtlichen Mehrheit der Bevölkerung auch handhabbar ist. Es gilt also, ein Optimum zwischen technischer Realisierbarkeit und wirtschaftlichem Aufwand zu erreichen. Nebst der vorerwähnten Komplexität ist es ebenso wichtig, dass ein solches Gerät/System auch eine hohe Autonomie mit nur sehr geringem Wartungsaufwand aufweist.

Der vorliegenden Erfindung liegt daher die Aufgabe zugrunde ein Tierabwehrsystem anzugeben, das eine effektive Abwehr von eindringenden fremden Tieren erlaubt, ohne dass dazu weder ein komplexer Konfigurationsaufwand noch ein nennenswerter Wartungsaufwand erforderlich ist und das insbesondere auch abgesetzt, das heisst ausserhalb einer öffentlichen Stromversorgung dauerhaft operativ ist.

Diese Aufgabe wird durch die im unabhängigen Patentanspruch 1 angegebenen Merkmale gelöst. Vorteilhafte Ausgestaltungen der Erfindung sind in weiteren Ansprüchen angegeben.

Das erfindungsgemässe Tierabwehrsystem ist in einem unabhängigen Patentanspruch mit dem folgenden Wortlaut definiert:
Tierabwehrsystem das einen Microcontroller aufweist,
   - an den über eine Bildauswertungseinheit eine Kamera angeschlossen ist, wobei die Bildauswertungseinheit eine Bildauswertung von einem mit der Kamera erfassten Tier ausführt und Bildauswertungsdaten an den Microcontroller weiterleitet und welcher Microcontroller ein Abwehrmittel zur Tierabwehr steuert, wobei Microcontroller, Bildauswertungseinheit und Kamera von einer Batterie mit Energie versorgt werden;
dadurch gekennzeichnet, dass
ein an den Microcontroller angeschlossener Sensor vorgesehen ist, der bei Erfassung eines Tieres den Microcontroller aus einem Ruhezustand in einen Betriebszustand überführt und der Microcontroller anschliessend die Bildauswertungseinheit und die Kamera in einen Betriebszustand überführt und ein Abwehrmittel zur Tierabwehr entsprechend der empfangenen Bildauswertungsdaten aktiviert.

Zur Begrifflichkeit: Vorliegend ist ein Tierabwehrsystem beschrieben. Die Kamera erfasst nicht nur Tiere, sondern auch Objekte wie Fahrzeuge oder Menschen. Der Wortlaut der Patentansprüche ist daher so zu verstehen, dass unter einem mit der Kamera erfassten Tier auch ein Mensch oder Fahrzeug erfasst wird und entsprechend von der Bildauswerteeinheit unterschieden werden kann. Eine Formulierung «Tier bzw Objekt» dient hier nicht der Klarheit.

Aus den Merkmalen der erfindungsgemässen Lösung können sich die folgenden Vorteile zusätzlich ergeben:
i) Durch das Vorsehen eines Ruhezustandes - auch Stand-by genannt - reduziert sich der Energieverbrauch des erfindungsgemässen Tierabwehrsystems und ermöglicht somit eine hohe Autonomie auch in Gebieten mit nur sporadischer Energieversorgung durch ein Energieversorgungsnetz.
ii) Die Bildauswertung kann so parametrisiert werden, dass aus den übermittelten Bildauswertedaten erkennbar ist, ob ein Mensch oder ein Tier von der Kamera erfasst wurde. Trotzdem muss die Bildauswerteeinheit nicht so komplex sein, dass bestimmte Tierarten unterschieden werden können. Es reicht, wenn die Grösse des erfassten Objekts - zB in drei Grössenklassen - in den Bildauswertedaten enthalten ist. Somit kann mit den vorstehenden Angaben zu den Bildauswertedaten auch sichergestellt werden, dass erwachsene Menschen von einem solchen Tierabwehrsystem erkannt werden und sich somit in einem Garten frei bewegen können ohne gleich abgespritzt zu werden.

Vorteilhafte Ausführungsformen sind in den abhängigen Ansprüchen angegeben wie beispielsweise:
A) Die von der Bildauswertungseinheit aus den aufgenommenen Bildern dem Microcontroller weitergeleiteten Bildauswertungsdaten können eine Klassifizierung der mit der Kamera erfassten Objekte nach Grösse oder nach Proportion enthalten. Durch diese Klassifizierung der erfassten Objekte in Menschen und Tiere wird eine Fehlauslösung von Abwehrmitteln gegen Menschen verhindert.
B) Eine an den Microcontroller angeschlossene Antenne erlaubt, von Funk-Halsbändern ausgesendete Signale zu empfangen. Der Microcontroller wertet diese Signale so aus, in dem sie mit im Microcontroller gespeicherten Signal verglichen werden. Bei Gleichheit unterbleibt eine Aktivierung der Abwehrmittel. Diese sogenannte Freund-Feind-Erkennung erlaubt, dass die eigene Katze vom Tierabwehrsystem verschont wird. Die vorgängig erwähnten Funk-Halsbänder mit einer je eindeutigen Identität UUID müssen bei Inbetriebnahme des Tierabwehrsystems oder bei Hinzukommen eines weiteren eigenen Haustieres, dem Microcontroller bekannt gemacht werden. Für die Vornahme der Speicherung dieser eindeutigen Identität UUID kann ein Druckknopf zur Bedienung vorgesehen sein.
C) Die vorgenannten Bildauswertedaten können auch eine Typisierung der von der Kamera erfassten Tiere beinhalten, wie zB Hund, Katze, Fuchs. Dementsprechend ist es möglich, für jeden Typ von Tier spezifische Arten der Aktivierung der Abwehrmittel vorzusehen wie zB Tonhöhe oder Blitzdauer und Blitzfrequenz.
D) Durch das Vorsehen von handelsüblichen Komponenten für mindestens Microcontroller, Bildauswerteeinheit, Kamera und Sensor können die Kosten für die Herstellung eines solchen Tierabwehrsystems auf tiefem Niveau gehalten werden. Handelsüblich ist zu verstehen als: Mindestens die vorgenannten Komponenten können direkt (zB Online) bestellt werden und sind innerhalb weniger Tage geliefert.
E) Die bei einem Microcontroller enthaltene Mehrzahl von spezifischen Schnittstellen erlaubt, auch mehr als ein konkretes Abwehrmittel anzuschliessen und entsprechend der erfassten Bilder zu aktivieren.

Die Erfindung wird nachfolgend anhand der Zeichnung beispielsweise näher erläutert. Dabei zeigen:
FIG 1 Blockschema eines Ausführungsbeispiels der vorliegenden Erfindung;
FIG 2 Darstellung einer ersten Form eines kombinierten Abwehrmittels mit integrierten Sensormitteln;
FIG 3 Darstellung einer weiteren Form eines kombinierten Abwehrmittels mit integrierten Sensormitteln.

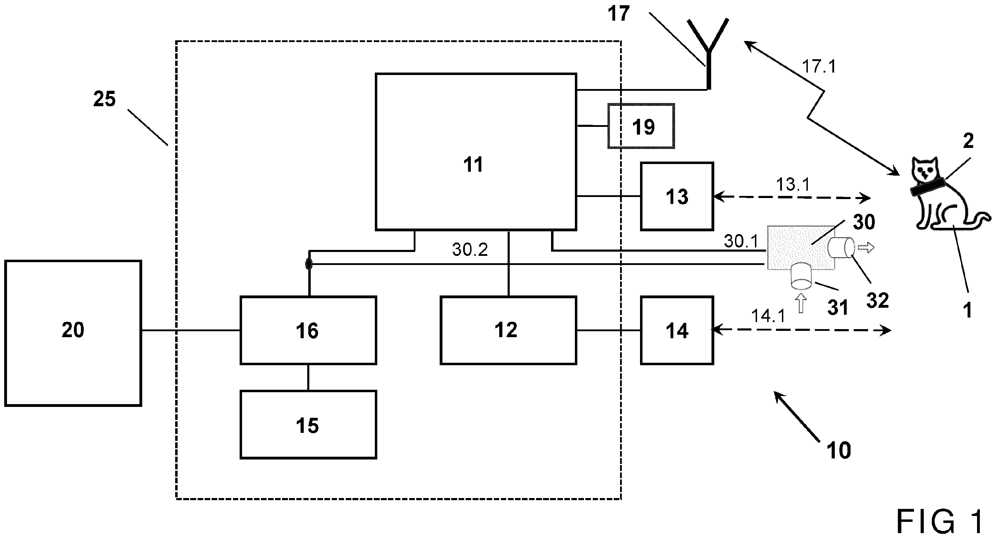

Die Figur 1 zeigt einen zentralen Teil der vorliegenden Erfindung mit den nachfolgend erläuterten Komponenten: Ein Microcontroller 11 wird energiemässig von einem Netzteil 16 versorgt. Das Netzteil 16 seinerseits bezieht die Energie von einer Batterie 15. Ausserdem ist das Netzteil 16 über eine Schnittstelle mit einem Solarpanel 20 verbunden, das Energie dem Netzteil 16 zuführt und abhängig vom Ladezustand der Batterie 15 entweder diese Batterie auflädt und/oder die Energie den übrigen Komponenten des Tierabwehrsystems zur Verfügung stellt. Anstelle eines Solarpanels 20 kann zusätzlich oder alternativ ein anderes Energieerzeugungsmodul wie zB ein kleineres Windrad vorgesehen sein. Über eine weitere Schnittstelle kann auch ein Anschluss des Netzteils 16 an das öffentliche Energieversorgungsnetz von zB 230V/50Hz vorgesehen sein.

Der Microcontroller 11 ist mit einer Bildauswertungseinheit 12 verbunden, die ihrerseits mit einer Kamera 14 verbunden ist. Die Bildauswertungseinheit 12 ist als käufliches Produkt (=handelsüblich) zur Bilderkennung/Bildauswertung ausgebildet. Rein beispielhaft werden hier zwei Produkte einer solchen Bildauswertungseinheit 12 angegeben: HX6538-A / WE2 AI Processor von Himax [6] oder ESP32 S3 EYE von Espressif [4].
Mit dem Bezugszeichen 14.1 ist eine Sichtverbindung zu einem zu detektierenden Tier 1 bzw Objekt 1 angegeben.

In der FIG 1 ist ein Abwehrmittel 30 als Wasserverteiler 30 dargestellt mit einer Wasserzuführung 31 und einer Wasserdüse 32. Die Ansteuerung dieses Abwehrmittels 30 erfolgt über eine Steuerleitung 30.1. Die Wasserzuführung erfolgt je nach Einsatzgebiet des vorliegenden Tierabwehrsystems 10 ab dem öffentlichen Wassernetz oder einem lokalen Tank oder ab einer Quelle. Dementsprechend müssen im Wasserverteiler 30 steuerbare Ventile vorgesehen werden. Die dazu benötigte Energie wird über eine Energieversorgungsleitung 30.2 vom Netzteil 16 dem Wasserverteiler 30 zugeführt. Vorstehend ist eine detaillierte Beschreibung für ein Abwehrmittel auf der Basis eines auszusendenden Wasserstrahls angegeben. In analoger Weise sind Leitungen 30.1 und 30.2 erforderlich, damit zB
- die LED's 41 Lichtblitze für eine bestimmte Dauer Lichtblitze aussenden können;
- Lautsprecher 42 mit einem «abwehrenden» Ton ein- oder ausgeschaltet werden können;
- bestimmte Töne und Tonfolgen eingestellt werden können.

Das hier eingeführte Tierabwehrsystem 10 muss auch in abgelegenen Gebieten einsetzbar sein, also Gebiete ohne ein Energieversorgungsnetz, das in aller Regel rund um die Uhr die Energiekunden mit elektrischer Energie versorgt. Wie vorstehend erläutert, kann ein Solarpanel 20 die erforderliche Energie einem Netzgerät 16 zuführen. Dessen Managementfunktion verteilt die Energie einerseits einer Batterie 15 und/oder andererseits den einzelnen Komponenten des Tierabwehrsystems 10. Dies reicht jedoch nicht aus, um das Tierabwehrsystem 10 für längere Zeit mit Energie zu versorgen. Für den Microcontroller 11 und die angeschlossenen Aktoren (wie zB Wasserdüse) und Sensoren (wie zB eine Kamera, ggf auch mehrere Kameras) muss daher ein Ruhezustand (auch Schlafmodus oder Stand-By-Betrieb genannt) vorgesehen werden, so dass der Energieverbrauch weiter sehr deutlich reduziert werden kann. Das Aufwecken des Microcontrollers 11 aus dem Ruhezustand kann wie folgt realisiert werden: Ein PIR-Sensor 13 ist am Microcontroller 11 angeschlossen und dient zur Detektion von Infrarotstrahlung, die von sich bewegenden Objekten, zB Tieren, Menschen oder auch Fahrzeugen (!) ausgeht. Wenn eine Bewegung eines eine IR-Strahlung erzeugendes Objektes erkannt wird, liefert der PIR-Sensor 13 einen relativ hohen Spannungspuls, der den Microcomputer 11 aus dem Energiesparmodus aufweckt.
Vorstehend ist als Sensor 13 ein PIR-Sensor eingeführt worden, es können jedoch auch Sensoren benutzt werden, die auf anderen Funktionsprinzipien beruhen wie in den beiden nachfolgenden Absätzen beschrieben.

Alternativ oder kumulativ stehen weitere Sensorprinzipien für die Detektion eines Tieres 1 bzw Objektes 1 zur Disposition, wie zB:
- 24GHz mmWave Sensor/ Doppler Radar (Human Static Presence; Radarsensor, basierend auf dem FMCW Radar-Prinzip);

- 60 GHz mmWave Sensor (Human Breath, Heartbeat);
- Lichtschranke / AK9753 IR Sensor (Human Presence and Animals);
- Ultraschall-Sensoren die Bewegungen im Erfassungsbereich durch reflektierende Schallwellen erkennt;
- Time-of-Flight (ToF) Distanzsensor mit Laser.

Die vorstehend aufgeführten weiteren Sensortypen werden hier nicht weiter diskutiert. Lediglich eine Bemerkung zum AK9753 IR Sensor [5]: Der Grove Human Presence Sensor AK9753 kann verwendet werden, um die Anwesenheit des menschlichen Körpers oder anderer Infrarotobjekte zu erkennen. Darüber hinaus sind vier Quanten-IR-Sensoren und einer integrierten Schaltung zur Charakteristik-Kompensation vorhanden. Der Sensor AK9753 kann verwendet werden, um die Bewegung eines IR-Objekts und die relative Position des IR-Objekts zu ermitteln. Ein integrierter Analog-Digital-Wandler bietet 16-Bit-Datenausgänge.

Der Microcontroller 11 ist so programmiert, dass er Pegeländerungen an einem dedizierten GPIO-Eingang erkennt. An diesem GPIO ist der PIR-Sensor 13 angeschlossen. Dieser liefert ein HIGH-Signal, sobald eine Bewegung erkannt wird: Der Microcontroller 11 «wacht auf». Einige Millisekunden nach dem Aufwachen wird vom Microcontroller 11 erneut geprüft, ob am PIR-Sensor 13 immer noch ein HIGH-Signal (=aktive Bewegung) anliegt, quasi als Schutz vor Fehlauslösungen. Dann startet der Microcontroller 11 parallel die Funktionen für den Scan über die von der Bildauswerteeinheit 12 empfangenen Bilder, die von der Kamera 14 empfangen wurden.

Freund-Feind-Erkennung FFE bzw Funk-Halsband-Identifikation:
Wird über den Sensor 13 eine Bewegung erkannt und der Microcontroller 11 aufgeweckt, so wird - wie vorstehend erwähnt - die Objekterkennung gestartet. Zusätzlich wird eine sogenannte Funk-Halsband-Identifikation gestartet. Ein Funk-Halsband 2 basiert vorteilhafterweise auf einer Bluetooth-Tag Erkennung: Bluetooth-Erkennung steht hier für die konkrete Ausprägung Bluetooth Low Energy BLE zur Erkennung von spezifischen BLE-Tags. Ein solches Funk-Halsband 2 weist eine vorher festgelegte Identität UUID, einen spezifischen Namen und eine MAC-Adresse auf. Die Proximität wird über die Signalstärke RSSI abgeschätzt.

Funk-Halsbänder 2 mit Bluetooth Tags die zum ersten Mal verwendet werden, müssen einmalig auf einem nichtflüchtigen Speicher NVS des Microcontrollers 11 abgelegt werden. Anstelle des Begriffs NVS wird auch der Begriff EEPROM verwendet. Diese Ablage geschieht über eine separate Funktion, die unabhängig vom regulären Betriebsprozess implementiert sein muss. Eine BLE-Scan-Funktion (zB bleScanStart()) wird durch das Drücken eines Bedienungselementes 18, zB ein LED-Knopfes 18, aktiviert. Ein LED-Knopf 18 hat den Vorteil, dass mit einer Aktivierung der betreffenden LED dieses Knopfes eine Rückmeldung des Tierabwehrsystems 10 generiert werden kann:
- Die LED ist über eine feste Dauer von wenigen Sekunden aktiv,
- Die LED blinkt mit wenigstens zwei verschiedenen Frequenzen.
Durch diese Signalisierung erhält der Nutzer des Tierabwehrsystems 10 Informationen über den Stand der Registrierung eines Funk-Halsbandes 2.
Eine Implementierung sieht vor, dass der LED-Knopf 18 für mindestens 7 Sekunden gedrückt werden muss. Dann leuchtet die LED des betreffenden LED-Knopfes 18 als Feedback für den Nutzer statisch auf für die Dauer eines Scans (zB 5 Sekunden). Das Drücken des LED-Knopfes 18 führt ausserdem auch dazu, dass der Microcontroller 11 aus dem Ruhezustand (Deep Sleep, Stand-by) erwacht. Wichtig ist, dass die Funk-Halsbänder 2 mit den Tags oder zusätzliche Tags, die neu gespeichert werden sollen, einen Abstand von unter einem Meter zum Gehäuse 25 aufweisen. So wird über die Signalstärke RSSI, die Identität UUID und den Namen der Tags sichergestellt, dass nur die Tags gespeichert und abgelegt werden, die auch tatsächlich vom Nutzer des Tierabwehrsystems 10 stammen. Der Microcontroller 11 speichert die MAC-Adresse derjenigen Funk-Halsbänder 2, die den definierten Kriterien entsprechen. Diese Informationen werden im internen NVS-Speicher des Microcontrollers 11 abgelegt und bei zukünftigen Scans zu Vergleichszwecken herangezogen. Ist der NVS-Speicher voll und wird ein manueller BLE-Scan and Store Vorgang ausgeführt, so wird vorteilhafterweise dasjenige Tag im Speicher ersetzt, welches mit der geringsten Signalstärke RSSI gespeichert wurde. Andere Kriterien wie zB die zeitliche Reihenfolge der gespeicherten Identitäten könnten ebenfalls angewendet werden.

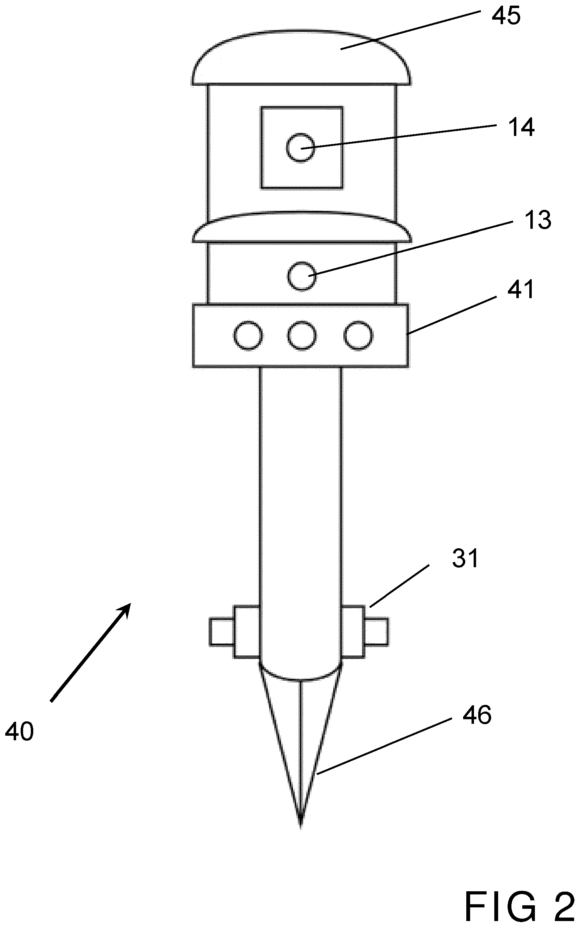

Figur 2 zeigt eine erste Form eines kombinierten Abwehrmittels 40 mit integrierten Sensormitteln. In der FIG 2 ist nur der Wasseranschluss 31 gezeigt; ein gesteuertes Wasserrohr 32 oder eine Sprinkler-Düse sind nicht dargestellt. Dieses kombinierte Abwehrmittel 40 weist einen Sensor 13 auf, der für die Detektion von Tieren 1 in der Umgebung eingesetzt ist. Die Kamera 14 ist aus Gründen des Erfassungsraumes oben angebracht, wenn es primär um die Erfassung von Säugetieren geht. Denkbar ist eine Anordnung einer weiteren Kamera 14 unten für die Erfassung von Reptilien. Zum Schutz vor eventueller direkter Sonneneinstrahlung bei niedrigem Sonnenstand regelt die Kamera 14 automatisch die Belichtung. Zusätzliche Schutzmassnahmen könnten Neutraldichtefilter, Polarisationsfilter, wie auch spezielle Kamera-Blende darstellen, welche vor der Linse angebracht werden, je nachdem in einem speziellen Winkel zur Linse und das Kamera-Sichtfeld einschränkend. Als Abwehrmittel sind in der FIG 2 eine Serie von LEDs 41 vorgesehen, die gemäss einem bestimmten Muster Lichtblitze aussenden. Der Begriff «Bestimmtes Muster» kann auch beinhalten: Zufälliges und unregelmässiges Aussenden von Blitzen. Für die Kamera 14 ist ein Schutz wichtig. Dazu ist ein Gehäuseübergang 45 zum Schutz vor direkter Sonneneinstrahlung und zum Schutz vor Regen vorgesehen.

Die Kamera 14 kann solange dauernd eingeschaltet sein, als sie eine Bewegung eines Objektes 1 feststellt. Die angeschlossene Bildauswertungseinheit 12 führt auf den Bilddaten der Kamera 14 eine Rauschunterdrückung. Die verbleibenden Bilddaten werden von der Bildauswertungseinheit 12 ausgewertet und als Bildauswertungsdaten dem Microcontroller 11 zugeführt. Ist die Wasserdüse 32 gesteuert hinsichtlich Richtung, kann vorgesehen werden, dass der Microcontroller 11 die Wasserdüse so steuert, dass der Wasserstrahl dem mit der Kamera 14 erfassten Tier 1 folgt. Mit anderen Worten: Der Wasserstrahl folgt dem erfassten Tier im Operationsbereich des gesteuerten Wasserrohrs 32.
Alternativ kann für die Steuerung (Zielfolge) der Wasserdüse 32 auch vorgesehen werden, die Bewegungsdaten des Sensors 13 zu verwenden, wie dies vorstehend zB für den Sensor des Typs AK9753 angegeben wurde.

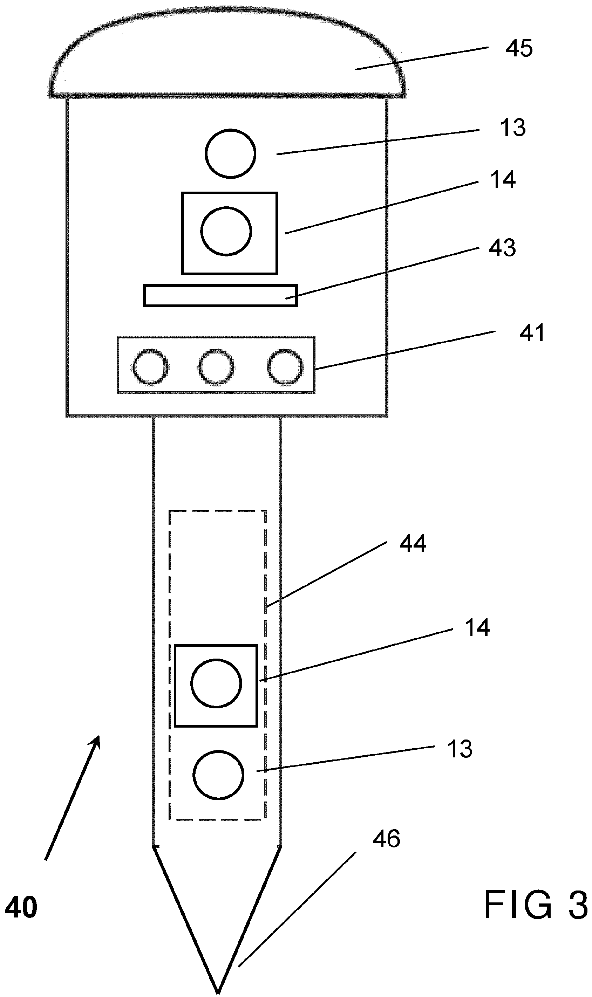

FIG 3 zeigt eine weitere Form eines kombinierten Abwehrmittels 40. Bei dieser Form kann analog zu FIG 2 ein Sensor 13 und/oder eine Kamera 14 eingebaut sein. Es kann auch vorgesehen sein, mehr als je einen einzigen Sensor 13 und eine einzige Kamera 14 vorzusehen. Durch die Verwendung von handelsüblichen Komponenten verursacht diese Mehrzahl keine nicht beherrschbare Komplexität bei der Realisierung. Die in FIG 3 dargestellte Form ist insoweit etwas «massiver» dargestellt, weil sie im Fuss ein Vibrationsmittel 44 enthält, dass den Boden in der näheren Umgebung des kombinierten Abwehrmittels 40 vibrieren kann. Dadurch können insbesondere Reptilien abgewehrt werden. Ob die Abwehr mittels des Vibrationsmittels 44 aufgrund der Erkennung eines Reptils erfolgt oder sporadisch und zufällig, ist eine Angelegenheit der Einstellungen des Tierabwehrsystems 10. Das Vibrationsmittel 44 kann durch eine rotierende Unwucht realisiert werden, der Antrieb erfolgt durch einen Elektromotor (nicht dargestellt in der Zeichnung). FIG 3 und FIG 2 zeigen unten am Fuss eine Spitze 46 für ein erleichtertes Setzen des kombinierten Abwehrmittels 40.

Die im vorherigen Absatz erwähnten Einstellungen des Tierabwehrsystems 10, erlauben, ggf auch mehr als ein kombiniertes Abwehrmittel 40 an den Microcontroller 11 anzuschliessen. Dies kann erfolgen durch «plug and play». Ebenso ist es möglich, eine Schnittstelle zu einem externen Rechner vorzusehen, über den Einstellungen und Wartung des Tierabwehrsystems 10 vorgenommen werden können.

Die Dauer eines aktiven Zustandes des Microcontrollers 11 kann ebenfalls konfiguriert werden, zB abhängig von der konkreten Einsatzumgebung.

### Liste der Bezugszeichen, Glossar

- 1: Objekt, Tier
- 2: Funk-Halsband, Freund-Feinderkennung FFE
- 10: Tierabwehrsystem
- 11: Microcontroller
- 12: Bildauswertungseinheit, image analysis unit
- 13: Sensor; passive infra-red sensor, PIR-Sensor
- 13.1: IR-Transmission
- 14: Kamera
- 14.1: Sichtverbindung zwischen Kamera zu Tier/Objekt
- 15: Batterie
- 16: Netzgerät, Netzteil
- 17: Antenne
- 17.1: Verbindung Antenne - Funk-Halsband
- 18: Bedienungselement, Bedienungsknopf für Konfigurierung Microcontroller 11
- 20: Solarpanel; Windrad
- 25: Gehäuse
- 30: Abwehrmittel wie Wassersprinkler, Ultraschalllautsprecher, Blitz LED, Vibrationsmittel, Austrittsöffnung für Geruchsaussendung
- 31: Wasseranschluss, Wasserzuführung
- 32: Sprinkler-Düse, Wasserdüse; gesteuertes Wasserrohr
- 40: Kombiniertes Abwehrmittel mit integrierten Sensormitteln
- 41: LED; LEDs, Blitz-LED
- 42: Lautsprecher, Ultraschall-Lautsprecher
- 43: Austrittsöffnung für Geruchsaussendung
- 44: Vibrationsmittel, rotierende Unwucht
- 45: Gehäuseüberhang zum Schutz vor Wasser und Sonne
- 46: Spitze um das Abwehrmittel in den Boden stecken zu können

### Erläuterung der verwendeten Akronyme

- BLE: Bluetooth Low Energy
- EEPROM: Electrically Erasable Programmable Read-Only Memory
- FFE: Freund-Feid-Erkennung
- GPIO: General Purpose Input/Output
- LED: Licht emittierende Diode; light-emitting diode
- NVS: non-volatile storage
- PIR: Passive Infra-Red
- RSSI: Received Signal Strength Indication
- UUID: Universally Unique Identifier

### Liste der zitierten Dokumente und Quellen

[1] US 2023/0329219 A1 SYSTEM AND METHODS FOR MITIGATION OF DANGEROUS WILDLIFE Publication Date: Oct. 19, 2023
[2] US 2021/0259235 Al DETECTION OF ANIMAL INTRUSIONS AND CONTROL OF A REPELLENT MECHANISM FOR DETECTED ANIMAL INTRUSIONS Publication Date: Aug. 26, 2021
[3] DE 202 11129 U1 Vorrichtung zum Fernhalten der Vögel Bekanntmachung im Patentblatt: 12.12.2002
[4] https://www.espressif.com/en/taxonomy/term/890 ESP32 S3 Eye Development Board
[5] https://eu.robotshop.com/de/products/grove-humanpresence-sensor-ak9753
   AK9753 IR Sensor (Human Presence and Animals)
[6] https://www.himax.com.tw/
   HX6538-A WE2 AI Processor

## Patentansprüche

1. Tierabwehrsystem (10) das einen Microcontroller (11) aufweist,
- an den über eine Bildauswertungseinheit (12) eine Kamera (14) angeschlossen ist, wobei die Bildauswertungseinheit (12) eine Bildauswertung von einem mit der Kamera (14) erfassten (14.1) Tier (1) ausführt und Bildauswertungsdaten an den Microcontroller (11) weiterleitet und welcher Microcontroller (11) ein Abwehrmittel (30) zur Tierabwehr steuert, wobei Microcontroller (11), Bildauswertungseinheit (12) und Kamera (14) von einem Netzteil (16) mit Energie versorgt werden;
**dadurch gekennzeichnet, dass**
ein an den Microcontroller (11) angeschlossener Sensor (13) vorgesehen ist, der bei Erfassung eines Tieres den Microcontroller (11) aus einem Ruhezustand in einen Betriebszustand überführt und der Microcontroller (11) anschliessend die Bildauswertungseinheit (12) und die Kamera (14) in einen Betriebszustand überführt und ein Abwehrmittel (30) zur Tierabwehr entsprechend der empfangenen Bildauswertungsdaten aktiviert.

2. Tierabwehrsystem nach Anspruch 1,
**dadurch gekennzeichnet, dass**
für Microcontroller (11), Bildauswerteeinheit (12), Kamera (14) und Sensor (13) handelsübliche Komponenten eingesetzt sind.

3. Tierabwehrsystem nach Anspruch 1 oder 2,
**dadurch gekennzeichnet, dass**
der Sensor (13) als ein passiver Infrarot-Sensor (13) ausgebildet ist.

4. Tierabwehrsystem nach einem der Ansprüche 1 bis 3,
**dadurch gekennzeichnet, dass**
die Bildauswertungsdaten Informationen über das von der Kamera (14) erfasste Tier enthalten.

5. Tierabwehrsystem nach einem der Ansprüche 1 bis 4,
**dadurch gekennzeichnet, dass**
eine Antenne (17) zum Empfang eines Signals (17.1) eines vom Tier (1) getragenen Funk-Halsbandes (2) an den Microcontroller (11) angeschlossen ist,
**dadurch gekennzeichnet, dass**
der Microcontroller (11) so programmiert ist, dass bei Empfang eines solchen Signals (17.1) die Aktivierung des Abwehrmittels (30) bei der Erfassung des Tiers (1) mit dem Sensor (13) unterbleibt.

6. Tierabwehrsystem nach einem der Ansprüche 1 bis 5,
**dadurch gekennzeichnet, dass**
das Abwehrmittel (30) ein vom Microcontroller (11) gesteuertes Wasserrohr (32) zum Ausspritzen von Wasser aufweist, wobei das Wasser über einen Wasseranschluss (31) dem Abwehrmittel (30) zuführbar ist.

7. Tierabwehrsystem nach Anspruch 6,
**dadurch gekennzeichnet, dass**
das Wasserrohr (32) gemäss den mit von der Bildauswertungseinheit (12) übermittelten Bildauswertungsdaten so angesteuert wird, dass es der Bewegungsrichtung des erfassten Tieres (1) folgt.

8. Tierabwehrsystem nach einem der Ansprüche 1 bis 7,
**dadurch gekennzeichnet, dass**
das Abwehrmittel (30) zur Tierabwehr als Lautsprecher (42) ausgebildet ist, der bei Aktivierung durch den Microcontroller (11) einen Ton aussendet.

9. Tierabwehrsystem nach Anspruch 8,
**dadurch gekennzeichnet, dass**
der Microcontroller (11) entsprechend der von der Bildauswertungseinheit (12) empfangenen Bildauswertungsdaten und entsprechend im Microcontroller (11) gespeicherten Abwehrdaten den Lautsprecher (42) mit einem bestimmten Ton und einer bestimmten Tonfolge aktiviert.

10. Tierabwehrsystem nach einem der Ansprüche 1 bis 9,
**dadurch gekennzeichnet, dass**
das Abwehrmittel (30) zur Tierabwehr LEDs (41) aufweist, die bei Aktivierung durch den Microcontroller (11) für eine bestimmte Dauer Lichtblitze aussenden.

11. Tierabwehrsystem nach einem der Ansprüche 1 bis 10,
**dadurch gekennzeichnet, dass**
das Abwehrmittel (30, 40) eine Öffnung (43) aufweist, durch welche Öffnung (43) bei einer Aktivierung durch den Microcontroller (11) Geruchsstoffe ausgesprüht werden.

12. Tierabwehrsystem nach einem der Ansprüche 1 bis 11,
**dadurch gekennzeichnet, dass**
das Abwehrmittel (30, 40) eine Spitze (46) aufweist, um in den Boden gesteckt zu werden und weiter ein Vibrationsmittel (44) aufweist, das bei Aktivierung durch den Microcontroller (11) für einen bestimmte Dauer Vibrationen des Bodens erzeugt.

13. Tierabwehrsystem nach einem der Ansprüche 1 bis 12,
**dadurch gekennzeichnet, dass**
das Netzteil (16) mit einer Batterie (15) verbunden ist und eine Schnittstelle zum Anschluss eines Solarpanels (20) oder zum Anschluss an ein öffentliches Energieversorgungsnetz aufweist.

14. Tierabwehrsystem nach einem der Ansprüche 1 bis 13,
**dadurch gekennzeichnet, dass**
- Microcontroller (11), Bildauswertungseinheit (12) und Netzteil (16) in einem Gehäuse (25) angeordnet sind und
- wenigstens ein Abwehrmittel (30), wenigstens ein Sensor (13) und die Kamera (14) in einem kombinierten Abwehrmittel (40) enthalten sind, welches kombinierte Abwehrmittel (40) abgesetzt zum Gehäuse (25) anschliessbar ist.
